# EUROPEAN PATENT SPECIFICATION

(11) **EP 2 790 335 B1**
(45) Date of publication and mention of the grant of the patent: **22.03.2017**
(21) Application number: 14164013.6
(22) Date of filing: 09.04.2014
(51) Int. Cl.: H04B 7/26, H04L 5/00

(54) **Wireless communication system**
Drahtloses Kommunikationssystem
Système de communication sans fil

(30) Priority: 10.04.2013 JP 2013082156
(43) Date of publication of application: 15.10.2014
(73) Proprietor: Panasonic Intellectual Property Management Co., Ltd., Osaka-shi, Osaka 540-6207 (JP)
(72) Inventor: Hoshiba, Keitaro, Chuo-ku, Osaka 540-6207 (JP); Kurita, Masanori, Chuo-ku, Osaka 540-6207 (JP)
(74) Representative: Appelt, Christian W.

(56) References cited:
- EP-A1- 1 833 197
- WO-A1-00/62438
- JP-A- 2006 343 979
- US-B1- 6 711 151

## Description

### TECHNICAL FIELD

The invention relates generally to wireless communication systems and, more particularly, to a wireless communication system in which transmission and reception of wireless signals are performed between a master terminal and each of a plurality of slave terminals, using a radio wave as a medium.

### BACKGROUND ART

Conventionally, there has been a wireless communication system described in Japanese Published Unexamined Patent Application No. 2006-343979 (hereinafter, referred to as "document 1"). As one example of the wireless communication system, this document 1 discloses a fire alarm system that transmits fire sensing information transmitted from a fire sensor with a wireless signal to a central monitoring board via a repeater. The conventional example described in the document 1 achieves wireless communication between each of fire sensors and a corresponding repeater through Time Division Multiple Access (TDMA) system, thereby avoiding collision of wireless signals transmitted from the fire sensors.

In this wireless communication system, there is a case where two or more repeaters (master terminals) are located so that coverage areas of their radio waves overlap with each other. In this case, when at least part of a period, during which a fire sensor (slave terminal) transmits a wireless signal to a corresponding repeater (master terminal), overlaps a period during which another fire sensor transmits a wireless signal to a corresponding another repeater, there is a possibility that those repeaters cannot receive the wireless signals and therefore wireless communication is disabled.

Here, regarding the wireless communication standard, generally, a plurality of frequency channels is provided. Accordingly, when each fire sensor determines that the wireless communication with the corresponding repeater is disabled, there is a case of automatically changing the present frequency channel to another frequency channel (e.g., see the European standard EN54-25). On the other hand, in response to the automatically change in the fire sensor, the corresponding repeater may search for presence or absence of the wireless signal while sequentially changing a frequency channel in the plurality of frequency channels selectable by the fire sensors, to select the frequency channel on which the wireless signal is successfully received. As a result, it is possible to achieve the wireless communication between each fire sensor and the corresponding repeater, on the frequency channel without interference.

In the conventional example, the repeater is configured to determine the presence of the wireless signal when a reception intensity of the radio wave in a frequency channel agrees with a predetermined level or more, and continue the reception of the wireless signal, using the frequency channel. However, in the case of determining the presence or absence of the wireless signal through the reception intensity of the radio wave, even when having received a disturbing wave (including a radio wave having a wireless signal which should not be received originally), the repeater may continue the reception of the disturbing wave, and therefore, it may cause delay of a timing of changing to another frequency channel. As a result, a problem may occur, where a period (dead time) during which a desired wave (a radio wave having a wireless signal which should be received originally) cannot be received is increased with an increase in a period required for changing (searching for) the frequency channel.

WO 00/62438 A1 relates to an uncoordinated frequency hopping cellular system. The system includes a mobile unit and a number of base stations. The mobile unit determines information pertaining to a set of base stations that are within a geographical region defined by a location of the mobile unit, and supplies, to at least one of the base stations in the set, the information pertaining to at least one other base stations in the set. The information may include address information corresponding to the set of base stations, and may include clock offset information representing a difference between a clock value associated with said at least one of the base stations and a clock value associated with at least one of the other base stations in the set. As different mobile units supply information to the base station, the base station accumulates information about other base stations in the system. The base station supplies this accumulated information to mobile units, so that they may readily have information (e.g., address and/or synchronization information) for more readily establishing communication with base stations that they have not yet encountered.

EP 1 833 197 A1 relates to a power management method for managing power consumption of battery-driven wireless nodes within a wireless communication system. This method comprises a step of constructing a plurality of groups using a plurality of wireless nodes during construction of a network; a step of provisionally deciding, from among the wireless nodes in each group, a group master node serving as a group master that communicates with the other nodes in the group and that functions as a communication relay station for communicating with the other groups, with the other nodes in the group serving as slave nodes that are connected under the control of the group master node to perform their respective terminal station operation; a step in which the wireless nodes in each group exchange data with each other at a commencement session and calculate the minimum required transmission power for each other; a step in which the wireless nodes in each group use the calculated minimum required transmission powers to communicate with each other; and a step of, when determining that the time of changing the group master has come, causing one of the slave nodes to take over the group master.

### DISCLOSURE OF THE INVENTION

It is an object of the present invention to provide a wireless communication system, which can reduce a period during which a desired wave cannot be received.

A wireless communication system of the present invention includes a master terminal and a plurality of slave terminals. In the wireless communication system, transmission and reception of first and second wireless signals are performed between the master terminal and each slave terminal, using a radio wave as a medium. The master terminal includes: a first transmitter configured to transmit the first wireless signal; a first receiver configured to receive the second wireless signal; and a first controller configured to control the first transmitter and the first receiver. Each slave terminal includes: a second transmitter configured to transmit
the second wireless signal; a second receiver configured to receive the first wireless signal; and a second controller configured to control the second transmitter and the second receiver. The second controller is configured to control the second transmitter to transmit the second wireless signal on a frequency channel that is selected from a plurality of frequency channels previously provided, and control the second receiver to receive the first wireless signal on the selected frequency channel. The first controller is configured to determine presence or absence of reception of the second wireless signal while sequentially changing a present frequency channel to be selected in the plurality of frequency channels. Each of the first and second wireless signals includes a frame that includes: a preamble for establishing bit synchronization; and a unique word for establishing frame synchronization. The first controller is configured to determine the presence of the reception of the second wireless signal on the present frequency channel, if the frame synchronization is established before a prescribed period elapses after the bit synchronization is established for the radio wave received by the first receiver, and to further continue the reception of the second wireless signal on the present frequency channel. The first controller is further configured to determine the absence of the reception of the second wireless signal on the present frequency channel, if the frame synchronization is not established before the prescribed period elapses, and to further change the present frequency channel to a subsequent frequency channel.

In the wireless communication system, preferably, each of the first and second wireless signals is transmitted and received with a plurality of time slots that is synchronized with a synchronizing signal. Preferably, the plurality of time slots includes: a downlink time slot from the master terminal to each slave terminal; and a plurality of uplink time slots from each slave terminal to the master terminal, the plurality of uplink time slots being assigned to the plurality of slave terminals respectively. Preferably, the first controller is configured to determine, for each of the plurality of uplink time slots, the presence or absence of the reception of the second wireless signal while sequentially changing the present frequency channel.

In the wireless communication system, preferably, when determining the presence of the reception of the second wireless signal in a uplink time slot of the plurality of uplink time slots, the first controller is configured to control the first receiver to continue the reception of the second wireless signal in the uplink time slot, and then not to change the present frequency channel to the subsequent frequency channel even after the reception of the second wireless signal is finished.

In the wireless communication system, preferably, when an intensity of the radio wave received by the first receiver on the present frequency channel is less than a predetermined value, the first controller is configured to control the first receiver to change the present frequency channel to the subsequent frequency channel before establishment of the bit synchronization.

In the wireless communication system, preferably, the first receiver includes a plurality of antennas, and the first controller is configured to measure an intensity of the radio wave received by the first receiver, while sequentially changing an antenna to be selected in the plurality of antennas, for each of the plurality of frequency channels, and control the first receiver to receive the second wireless signal with, from among the plurality of antennas, an antenna in which the measured intensity is relatively high.

In the wireless communication system, preferably, the first receiver includes a plurality of antennas, and the first controller is configured to control the first receiver to receive the second wireless signal, while sequentially changing an antenna to be selected in the plurality of antennas, for each of the plurality of frequency channels.

In the wireless communication system, preferably, the first controller is configured to make the first transmitter periodically transmit the first wireless signal including a message for requesting a response to each slave terminal, and the second controller is configured to regard the first wireless signal as the synchronizing signal to make the plurality of time slots, when receiving the message in the first wireless signal received by the second receiver.

In the wireless communication system, preferably, the first controller is configured to store a priority level that is previously set for each of the plurality of frequency channels and change to, from among the plurality of frequency channels, a frequency channel in which the priority level is high, at relatively high frequency.

According to the wireless communication system of the invention, when determining the absence of the reception of the second wireless signal on a present frequency channel due to the situation where the frame synchronization cannot be established, the first controller controls the first receiver to change the present frequency channel to the subsequent frequency channel to receive the second wireless signal without continuing the reception of the second wireless signal on the present frequency channel, thereby reducing a period during which the first receiver receives a disturbing wave. As a result, it is possible to reduce a period during which a desired wave cannot be received.

### BRIEF DESCRIPTION OF THE DRAWINGS

Preferred embodiments of the invention will now be described in further details. Other features and advantages of the present invention will become better understood with regard to the following detailed description and accompanying drawings where:
Fig. 1A is a block diagram illustrating a slave terminal (fire sensor) of a wireless communication system according to an embodiment;
Fig. 1B is a block diagram illustrating a master terminal (repeater) of the wireless communication system according to the embodiment;
Fig. 1C is a block diagram illustrating a central monitoring board of the wireless communication system according to the embodiment;
Fig. 2 is a system configuration diagram illustrating the wireless communication system according to the embodiment;
Fig. 3 is a diagram for explaining a frame format in the wireless communication system according to the embodiment;
Fig. 4 is a diagram for explaining a super-frame in the wireless communication system according to the embodiment; and
Fig. 5 is a timing diagram for explaining operation of the wireless communication system according to the embodiment.

### DESCRIPTION OF EMBODIMENTS

Hereinafter, an embodiment where technical ideas of the present invention are applied in a fire alarm system will be explained below in detail, referring to the drawings.

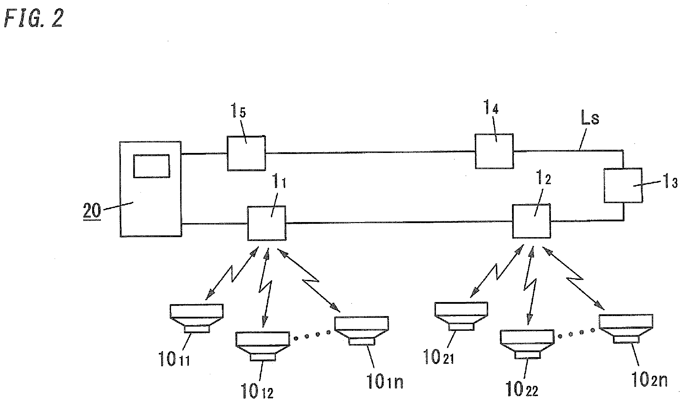

As shown in Fig. 2, a wireless communication system (fire alarm system) of the present embodiment includes one central monitoring board 20, a plurality of repeaters 1 (1₁ to 1₅) (in the shown example, five repeaters), and a plurality of fire sensors 10 (10₁₁ to 10₁ₙ, and 10₂₁ to 10₂ₙ) (in the shown example, six fire sensors). That is, in the present embodiment, a repeater 1 corresponds to a master terminal (that is, a coordinator), and a fire sensor 10 corresponds to a slave terminal. Here, the slave terminal is not limited to the fire sensor 10, and may be a sensor that senses a gas leak, or intrusion of a person into an area to be monitored, for example.

The plurality of repeaters 1₁ to 1₅ are connected to the central monitoring board 20 via a signal line Ls (by a multi-drop connection). Data transmission is performed between the central monitoring board 20 and each of the plurality of repeaters 1₁ to 1₅ via the signal line Ls.

Further, the repeater 1ᵢ (i=1, 2, ..., 5) and the plurality of fire sensors 10ᵢₘ (m=1, 2, ..., n) constitute a subsystem. The repeater 1ᵢ is configured to perform wireless communication, using a radio wave as a medium, with the plurality of fire sensors 10ᵢₘ that are members of the subsystem to which the repeater belongs. That is, when receiving fire sensing information from one of the plurality of fire sensors 10ᵢₘ, the repeater 1ᵢ transmits the received fire sensing information to the central monitoring board 20 via the signal line Ls. Then, under control of the central monitoring board 20, necessary measures are taken (such as issuing an alarm, reporting a place where fire occurs, and reporting the fire to a fire station). In Fig. 2, illustration of fire sensors is omitted, which are members of a subsystem to which each of the repeaters 1₃ to 1₅ belongs. The number of the plurality of repeaters 1 in Fig. 2 is one example, and is not limited to five.

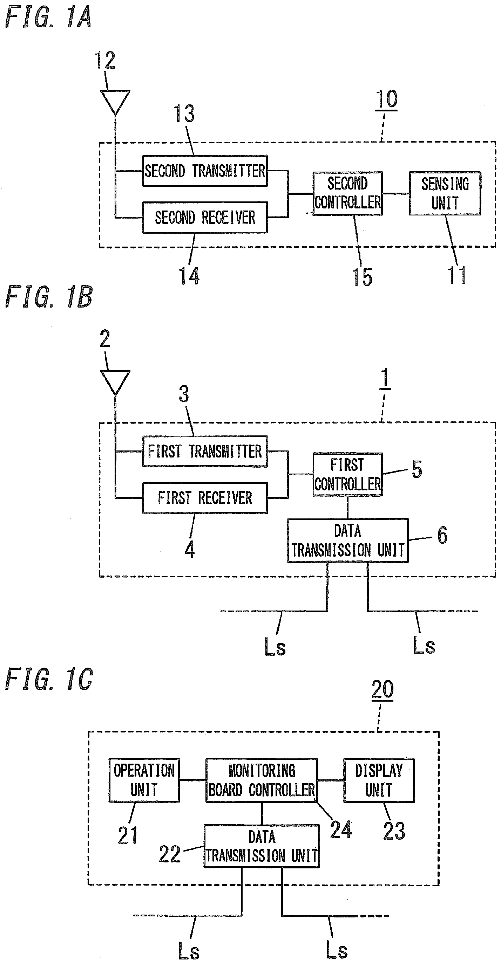

Each fire sensor 10 is installed on a ceiling of a facility for example, and, as shown in Fig. 1A, includes a sensing unit 11, an antenna 12, a second transmitter 13, a second receiver 14, and a second controller 15. The sensing unit 11 is configured to detect, for example, smoke generated by fire, thereby sensing the fire.

The second transmitter 13 is configured to modulate a carrier wave having a specified frequency with transmission data, and transmit the modulated signal as a wireless signal (second wireless signal) via the antenna 12, using a radio wave as a medium. The second receiver 14 is configured to demodulate a wireless signal (first wireless signal) that is received via the antenna 12 to transmission data to output to the second controller 15. The second controller 15 includes, as a main component, a microcomputer and a non-volatile memory, such as EEPROM (Electrically Erasable Programmable Read-Only Memory). The second controller 15 is configured to execute programs stored in the non-volatile memory to perform various processing described later.

Each of the second transmitter 13 and second receiver 14 is configured to be capable of changing a frequency of the carrier wave (that is, a frequency channel) to any one of a plurality of frequency channels that is previously provided (hereinafter, the "frequency channel" is abbreviated as "channel"). The channel change is performed under control of the second controller 15. Because a method of changing the channel is conventionally well-known, the detail thereof is omitted.

As shown in Fig. 1B, each repeater 1 includes an antenna 2, a first transmitter 3, a first receiver 4, a first controller 5, and a data transmission unit 6. The first transmitter 3 is configured to modulate a carrier wave having a specified frequency with transmission data, and transmit the modulated signal as a wireless signal (the first wireless signal) via the antenna 2, using a radio wave as a medium. The first receiver 4 is configured to demodulate a wireless signal (the second wireless signal) that is received via the antenna 2 to transmission data to output to the first controller 5. The data transmission unit 6 is configured to transmit a transmission signal to the central monitoring board 20 and receive a transmission signal from the board 20, via the signal line Ls. The transmission signals are generated by modulating, with pulse width, a direct current voltage having bipolarity, which is applied between two lines of the signal line Ls (that is, the direct current voltage is subjected to pulse wave modulation (PWM) to generate the transmission signals). The first controller 5 includes, as a main component, a microcomputer and a non-volatile memory, such as EEPROM. The first controller 5 is configured to execute programs stored in the non-volatile memory to perform various processing described later.

Each of the first transmitter 3 and first receiver 4 is configured to be capable of changing the present channel to any one of the above-mentioned plurality of channels. The channel change is performed under control of the first controller 5. Because a method of changing the channel is conventionally well-known, the detail thereof is omitted.

Each repeater 1 is assigned with an identification code, in order to specify a transmission source and a transmission destination in the wireless communication. Also, each fire sensor 10 is assigned with an identification code. The identification code includes a system code for identifying an individual subsystem and a sensor number for specifying fire sensors 10 belonging to the same subsystem. For example, each repeater 1 is assigned with the individual system code, as the identification code, and each fire sensor 10 is assigned with a combination of the individual system code and the individual sensor number, as the identification code.

The central monitoring board 20 is installed in a control room or the like of the facility, and, as shown in Fig. 1C, includes an operation unit 21, a data transmission unit 22, a display unit 23, a monitoring board controller 24, and the like. The operation unit 21 is configured to monitor operation states of various switches, and output an operation signal to the monitoring board controller 24 when a switch is operated. The data transmission unit 22 is configured to transmit a transmission signal to the data transmission unit 6 of each repeater 1 and receive a transmission signal from the unit 6, via the signal line Ls, as described above. The display unit 23 includes a display device, such as a liquid crystal display or an organic EL display, and a drive circuit that drives the display device under control of the monitoring board controller 24. The monitoring board controller 24 includes, as a main component, a microcomputer and a non-volatile memory, such as EEPROM. The monitoring board controller 24 is configured to execute programs stored in the non-volatile memory to perform various processing described later.

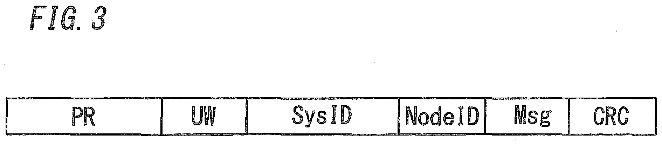

Fig. 3 shows a frame format of a frame transmitted and received between a repeater 1 and each of corresponding fire sensors 10. The frame format includes a preamble PR, a unique word UW, a system code SysID, a sensor number NodeID, a message Msg, and an error detection code CRC. The preamble PR is defined as, for example, a bit sequence of 32 bits in which "1" and "0" are arranged alternately. Each of the first receiver 4 and second receiver 14 is configured to establish bit synchronization of a received wireless signal with the preamble PR, and establish frame synchronization with the unique word UW.

When a repeater 1 transmits a message to a specific fire sensor 10 in a subsystem to which the repeater belongs, the first controller 5 is configured to store a sensor number of the specific fire sensor 10 in an area of the sensor number NodeID. When a repeater 1 transmits a common message to all fire sensors 10 in a subsystem to which the repeater belongs (broadcast transmission or multicast transmission), the first controller 5 is configured to store a specific number (e.g., "00"), which is not assigned to any of the fire sensors 10, in the area of the sensor number NodeID. On the other hand, when a fire sensor 10 transmits a wireless signal as a response signal to a repeater 1 in a subsystem to which the fire sensor 10 belongs, the second controller 15 may be configured to store its own sensor number in the area of the sensor number NodeID.

In each fire sensor 10, when receiving a wireless signal, the second receiver 14 amplifies and demodulates the received signal to data to output to the second controller 15. The second controller 15 then samples the data modulated by the second receiver 14, through a digital input port provided in the microcomputer. The second controller 15 further establishes the bit synchronization with the preamble PR, and then establishes the frame synchronization with the unique word UW, and then acquires data (identification code) stored in each of areas of the system code SysID and sensor number NodeID. Here, if the acquired identification code does not agree with an identification code of a fire sensor 10, the second controller 15 of the fire sensor 10 discards the demodulated data. If the acquired identification code agrees with the identification code of the fire sensor 10 and no bit error is detected, the second controller 15 acquires data (message) stored in an area of the message Msg. Also, if the acquired identification code agrees with a code corresponding to the broadcast transmission or multicast transmission, the second controller 15 acquires the data (message) stored in the area of the message Msg without discarding it.

Similarly, in each repeater 1, when receiving a wireless signal, the first receiver 4 is configured to amplify and demodulate the received signal to output to the first controller 5. The first controller 5 then samples the data modulated by the first receiver 4, through a digital input port provided in the microcomputer. The first controller 5 further establishes the bit synchronization with the preamble PR, and then establishes the frame synchronization with the unique word UW, and then acquires data (identification code) stored in the area of the system code SysID. Here, if the acquired identification code does not agree with an identification code of a repeater 1, the first controller 5 of the repeater 1 discards the demodulated data. If the acquired identification code agrees with the identification code of the repeater 1 and no bit error is detected, the first controller 5 of the repeater 1 acquires data (message) stored in the area of the message Msg. Also, if the acquired identification code agrees with the code corresponding to the broadcast transmission or multicast transmission, the first controller 5 acquires the data (message) stored in the area of the message Msg without discarding it.

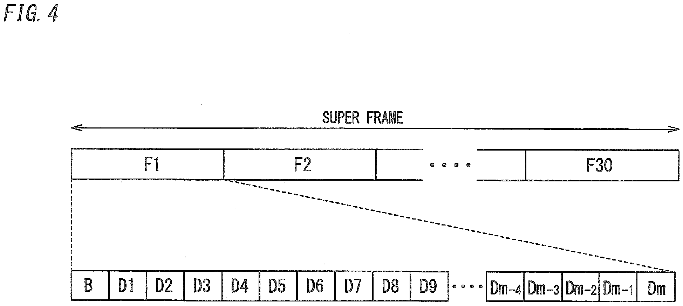

In each subsystem, one repeater 1ᵢ performs wireless communication with a plurality of fire sensors 10ᵢ₁ to 10ᵢₙ, through Time Division Multiple Access (TDMA) system. In the present embodiment, as shown in Fig. 4, each frame includes: one downlink time slot B (from the repeater 1ᵢ to a fire sensor 10ᵢₘ); and a plurality of uplink time slots D₁ to Dₘ (from the fire sensor 10ᵢₘ to the repeater 1ᵢ). In each frame, the plurality of uplink time slots D₁ to Dₘ are individually assigned to the plurality of fire sensors 10ᵢ₁ to 10ᵢₙ respectively. Therefore, it is possible to securely avoid collision among wireless signals transmitted from the plurality of fire sensors 10ᵢ₁ to 10ᵢₙ.

Here, in each subsystem, it is required to periodically check whether the plurality of fire sensors 10 is operating normally. Accordingly, each repeater 1 is configured to periodically transmit a common transmission request message to fire sensors 10 in a subsystem to which the repeater 1 belongs (broadcast transmission) to receive a response message from each of the fire sensors 10 (hereinafter, referred to as "periodic monitoring"). That is, if a repeater 1 receives no response message in any time slot of the plurality of uplink time slots, it is possible to determine that a malfunction, such as a dead battery, occurs in a fire sensor 10 to which the time slot is assigned. The second controller 15 of each fire sensor 10 is configured to control a built-in timer, based on a timing of receiving the transmission request message, to determine a timing of a time slot. That is, the second controller 15 is configured to regard a wireless signal including the transmission request message as a synchronizing signal (beacon) to determine the time slot according to the Time Division Multiple Access system. For this reason, hereinafter, the wireless signal including the transmission request message is referred to as the "synchronizing signal".

Fig. 4 shows a super-frame that includes a frame F1 (first frame) for transmitting the synchronizing signal and a plurality of frames F2 to F30 (second frame to 30th frame) following the frame F1. Messages except for the transmission request message are transmitted and received through the second and following frames F2 to F30. The plurality of uplink time slots D₁ to Dₘ may be individually assigned to fire sensors 10, through for example dip switches installed in the fire sensors 10 respectively. Alternatively, in a process of manufacturing the fire sensors 10, the assignment information may be previously stored in the non-volatile memories of the second controllers 15. Alternatively, when the fire sensors 10 are installed in the facility, a corresponding repeater 1 may sequentially assign the plurality of time slots to the fire sensors 10 and make the non-volatile memories of the second controllers 15 store the assignment information, by wireless communication. In the present embodiment, one super-frame includes 30 frames, but the number of frames included in one super-frame is not limited to 30.

In the present embodiment, when construction work is carried out, one channel is selected, on which wireless communication can be performed between a repeater 1 and each fire sensor 10. The repeater 1 performs the wireless communication with each fire sensor 10 on the selected channel. However, after operation of the wireless communication system is started, a part of the fire sensors 10 may become incapable of performing the wireless communication with the repeater 1 on the channel that has been selected in the construction work, due to deterioration of a communication environment.

So, when continuously failing reception of the synchronizing signal a plurality of times, the second controller 15 is configured to change the present channel in the second receiver 14. On the other hand, when continuously failing reception of the response message from any of the fire sensors **10** a plurality of times, the first controller **5** is configured to determine that the fire sensor **10** in question has changed the channel to another channel, and perform the following channel search processing.

The channel search processing performed by the first controller **5** will be explained below. First, the first controller 5 time-divides the downlink time slot B in the first frame F1, into a plurality of transmission periods, and controls the first transmitter 3 to transmit the synchronizing signal while changing a channel for each of the plurality of transmission periods. Alternatively, the first frame F1 may include a plurality of downlink time slots B1, B2, ... , and the first controller 5 may control the first transmitter 3 to transmit the synchronizing signal while changing the channel for each of the plurality of downlink time slots B1, B2, ....

The second controller 15, which has changed the channel, controls the second receiver 14 to perform intermittent reception in synchronization with a timing of when a corresponding transmission period starts to receive the synchronizing signal. When receiving the synchronizing signal, the second controller 15 controls the second transmitter 13 to transmit, on the currently selected channel, a wireless signal including a response message.

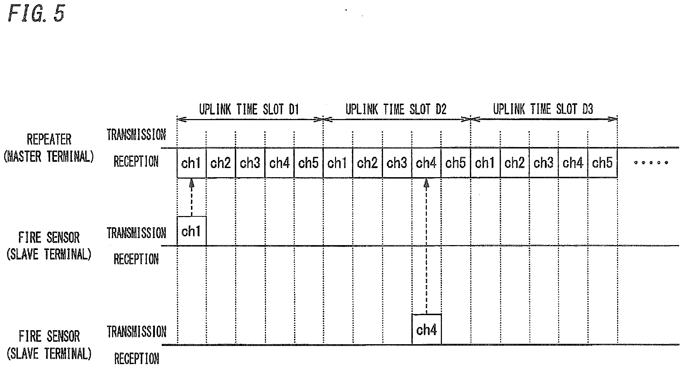

The first controller 5 time-divides each of the plurality of uplink time slots D1, D2, ... in the first frame F1 into a plurality of reception periods, and controls the first receiver 4 to receive the wireless signal while changing a channel for each of the plurality of reception periods (see Fig. 5). Therefore, the first receiver 4 of the repeater 1 can receive the wireless signal including the response message, during a reception period corresponding to the present channel selected by the fire sensor 10 in question, in an uplink time slot assigned to the fire sensor 10 in question which has changed the channel. For example, as shown in Fig. 5, it is assumed that a fire sensor 10₁₁, to which the 1st uplink time slot D1 is assigned, transmits a wireless signal on a channel ch1 and a fire sensor 10₁₂, to which the 2nd uplink time slot D2 is assigned, transmits a wireless signal on a channel ch4. In this case, a first receiver 4 of a repeater 1₁ receives the wireless signal transmitted from the fire sensor 10₁₁ on the channel ch1, during the 1st reception period in the 1st uplink time slot D1. Then, the first receiver 4 of the repeater 1₁ receives the wireless signal transmitted from the fire sensor 10₁₂ on the channel ch4, during the 4th reception period in the 2nd uplink time slot D2.

Here, the first receiver 4 changes the present channel to the subsequent channel, when an intensity of the radio wave received through the antenna 2 (RSSI: Received Signal Strength Indicator) is less than a predetermined value. On the other hand, the first receiver 4 continues the reception when the RSSI is the predetermined value or more. If the radio wave received through the antenna 2 is a desired wave (the radio wave including the wireless signal transmitted from the fire sensor 10), the first receiver 4 receives the preamble PR to establish the bit synchronization, and further receives the unique word UW to establish the frame synchronization. When the establishment of the frame synchronization is finished, the first receiver 4 receives the wireless signal, and demodulates the system code SysID, sensor number NodeID and message Msg to output to the first controller 5.

However, there is a case where the first receiver 4 accidentally establishes the bit synchronization with a disturbing wave received through the antenna 2. In this case, the first receiver 4 waits for reception of the unique word UW following the preamble PR. However, because the disturbing wave does not include the unique word UW, the reception period is finished in the state where the first receiver 4 waits for reception of the unique word UW. That is, there is a possibility that when receiving the disturbing wave in which the RSSI is the predetermined value or more, the first receiver 4 continues the reception and accordingly the transmission period of the desired wave elapses.

So, the first controller 5 determines presence or absence of reception of the wireless signal while sequentially changing a present channel to be selected in the plurality of channels, and further, when determining the presence of the reception of the wireless signal on the present channel, the first controller 5 controls the first receiver 4 to continue the reception of the wireless signal on the present channel. On the other hand, when determining the absence of the reception of the wireless signal on the present channel, the first controller 5 controls the first receiver 4 to change the present channel to another channel (subsequent channel). Here, if the frame synchronization is established before a prescribed period elapses after the bit synchronization is established for the radio wave received by the first receiver 4, the first controller 5 determines the presence of the reception of the wireless signal. On the other hand, if the frame synchronization is not established before the prescribed period elapses, the first controller 5 determines the absence of the reception of the wireless signal.

Therefore, when determining the absence of the reception of the wireless signal on a present channel due to the situation where the frame synchronization cannot be established, the first controller 5 controls the first receiver 4 to change the present channel to the subsequent channel to receive the wireless signal without continuing the reception of the wireless signal on the present channel, thereby reducing a period during which the first receiver 4 receives the disturbing wave. As a result, it is possible to reduce a period during which the desired wave cannot be received.

As described above, the first controller 5 time-divides each uplink time slot into the plurality of reception periods, controls the first receiver 4, and determines presence or absence of reception of the wireless signal while changing a channel for each of the plurality of reception periods. That is, because for each uplink time slot, only one fire sensor 10 transmits the wireless signal, it is possible to avoid collision among wireless signals transmitted from the plurality of fire sensors 10. It is preferred that each reception period is longer than a total period of the preamble PR and unique word UW of a frame, and is shorter than a length of the frame.

Further, when determining the presence of the reception of the wireless signal in a time slot, the first controller 5 controls the first receiver 4 to continue the reception of the wireless signal in the time slot, and then not to change the present channel to another channel (the subsequent channel) even after the reception of the wireless signal is finished. Therefore, there is no need for the first controller 5 to control the first receiver 4 to perform unnecessary channel change, and accordingly, it is possible to enhance responsiveness of the repeater 1.

When the RSSI on the present channel is less than the predetermined value, the first controller 5 controls the first receiver 4 to change the present channel to the subsequent channel before establishment of the bit synchronization. Therefore, it is possible to reduce an electric power consumed by the first receiver 4.

In the present embodiment, eight channels ch1 to ch8 are previously provided. Any one of the channels ch1 to ch4 is previously set, as an initial value, in each of the first and second transmitters 3 and 13, and first and second receivers 4 and 14, and may be changed to any one of the remaining four channels ch5 to ch8. That is, regarding the eight channels ch1 to ch8, the four channels ch1 to ch4 are set so as to have priority levels higher than the four channels ch5 to ch8. According to this, it is preferred that the first controller 5 is configured to change to the channels ch1 to ch4 in which the priority levels are high, at relatively high frequency. For example, it is preferred that the first controller 5 is configured to change the channel in the order of the channels ch1, ch5, ch1, ch6, ch1, ch7, ch1, ch8 and ch1.

Here, the repeater 1 may include a plurality of antennas 2 (e.g., two antennas), and the first controller 5 may be configured to control the first receiver 4 to switch the two antennas 2 to receive the wireless signal. In this case, it is preferred that directivities of the two antennas 2 are set to be different from each other. For example, one of the antennas 2 may be an omnidirectional antenna, and the other may be a directional antenna.

Preferably, the first controller 5 is configured to measure the RSSI, while sequentially changing an antenna 2 to be selected in the two antennas 2 for each channel, and control the first receiver 4 to receive the wireless signal with an antenna 2 in which the measured RSSI is relatively high. Alternatively, the first controller 5 may be configured to control the first receiver 4 to receive the wireless signal, while sequentially changing an antenna 2 to be selected in the two antennas 2 for each channel. Accordingly, it is possible to reduce an effect of fading.

As explained above, the wireless communication system includes a master terminal 1 and a plurality of slave terminals 10. In the wireless communication system, transmission and reception of first and second wireless signals are performed between the master terminal 1 and each slave terminal 10, using a radio wave as a medium. The master terminal 1 includes: a first transmitter 3 configured to transmit the first wireless signal; a first receiver 4 configured to receive the second wireless signal; and a first controller 5 configured to control the first transmitter 3 and the first receiver 4. Each slave terminal 10 includes: a second transmitter 13 configured to transmit the second wireless signal; a second receiver 14 configured to receive the first wireless signal; and a second controller 15 configured to control the second transmitter 13 and the second receiver 14. The second controller 15 is configured to control the second transmitter 13 to transmit the second wireless signal on a frequency channel that is selected from a plurality of frequency channels previously provided, and control the second receiver 14 to receive the first wireless signal on the selected frequency channel. The first controller 5 is configured to: determine presence or absence of reception of the second wireless signal while sequentially changing a present frequency channel to be selected in the plurality of frequency channels; control the first receiver 4 to continue, when determining the presence of the reception of the second wireless signal on the present frequency channel, the reception of the second wireless signal on the present frequency channel; and control the first receiver 4 to change, when determining the absence of the reception of the second wireless signal on the present frequency channel, the present frequency channel to a subsequent frequency channel. Each of the first and second wireless signals includes a frame that includes: a preamble PR for establishing bit synchronization; and a unique word UW for establishing frame synchronization. The first controller 5 is configured to: determine the presence of the reception of the second wireless signal, if the frame synchronization is established before a prescribed period elapses after the bit synchronization is established for the radio wave received by the first receiver 4; and determine the absence of the reception of the second wireless signal, if the frame synchronization is not established before the prescribed period elapses.

In the wireless communication system, preferably, each of the first and second wireless signals is transmitted and received with a plurality of time slots that is synchronized with a synchronizing signal. The plurality of time slots preferably includes: a downlink time slot B from the master terminal 1 to each slave terminal 10; and a plurality of uplink time slots D₁ to Dₘ from each slave terminal 10 to the master terminal 1. The plurality of uplink time slots D₁ to Dₘ is preferably assigned to the plurality of slave terminals 10 respectively. The first controller 5 is preferably configured to determine, for each of the plurality of uplink time slots D₁ to Dₘ, the presence or absence of the reception of the second wireless signal while sequentially changing the present frequency channel.

In the wireless communication system, preferably, when determining the presence of the reception of the second wireless signal in an uplink time slot of the plurality of uplink time slots D₁ to Dₘ, the first controller 5 is configured to control the first receiver 4 to continue the reception of the second wireless signal in the uplink time slot, and then not to change the present frequency channel to the subsequent frequency channel even after the reception of the second wireless signal is finished.

In the wireless communication system, preferably, when an intensity of the radio wave received by the first receiver 4 on the present frequency channel (RSSI) is less than a predetermined value, the first controller 5 is configured to control the first receiver 4 to change the present frequency channel to the subsequent frequency channel before establishment of the bit synchronization.

In the wireless communication system, preferably, the first receiver 4 includes a plurality of antennas 2. The first controller 5 is preferably configured to measure an intensity of the radio wave received by the first receiver 4 (RSSI), while sequentially changing an antenna 2 to be selected in the plurality of antennas 2 for each of the plurality of frequency channels, and control the first receiver 4 to receive the second wireless signal with, from among the plurality of antennas 2, an antenna 2 in which the measured intensity (RSSI) is relatively high.

In the wireless communication system, preferably, the first receiver 4 includes a plurality of antennas 2. The first controller 5 is preferably configured to control the first receiver 4 to receive the second wireless signal, while sequentially changing an antenna 2 to be selected in the plurality of antennas 2, for each of the plurality of frequency channels.

In the wireless communication system, preferably, the first controller 5 is configured to make the first transmitter 3 periodically transmit the first wireless signal including a message for requesting a response to each slave terminal 10. The second controller 15 is preferably configured to regard the first wireless signal as the synchronizing signal to make the plurality of time slots, when receiving the message in the first wireless signal received by the second receiver 14.

In the wireless communication system, preferably, the first controller 5 is configured to store a priority level that is previously set for each of the plurality of frequency channels and change to, from among the plurality of frequency channels, a frequency channel in which the priority level is high, at relatively high frequency.

## Claims

1. A wireless communication system, comprising a master terminal (1) and a plurality of slave terminals (10), in which transmission and reception of first and second wireless signals are performed between the master terminal (1) and each slave terminal (10), using a radio wave as a medium,
wherein the master terminal (1) comprises:
a first transmitter (3) configured to transmit the first wireless signal;
a first receiver (4) configured to receive the second wireless signal; and
a first controller (5) configured to control the first transmitter (3) and the first receiver (4),
wherein each slave terminal (10) comprises:
a second transmitter (13) configured to transmit the second wireless signal;
a second receiver (14) configured to receive the first wireless signal; and
a second controller (15) configured to control the second transmitter (13) and the second receiver (14),
wherein the second controller (15) is configured to control the second transmitter (13) to transmit the second wireless signal on a frequency channel that is selected from a plurality of frequency channels previously provided, and control the second receiver (14) to receive the first wireless signal on the selected frequency channel,
wherein the first controller (5) is configured to determine presence or absence of reception of the second wireless signal while sequentially changing a present frequency channel to be selected in the plurality of frequency channels;
**characterized in that**
each of the first and second wireless signals comprises a frame that includes: a preamble (PR) for establishing bit synchronization; and a unique word (UW) for establishing frame synchronization, and
wherein the first controller (5) is configured to:
determine the presence of the reception of the second wireless signal on the present frequency channel, if the frame synchronization is established before a prescribed period elapses after the bit synchronization is established for the radio wave received by the first receiver (4), and further continue the reception of the second wireless signal on the present frequency channel; and
determine the absence of the reception of the second wireless signal on the present frequency channel, if the frame synchronization is not established before the prescribed period elapses, and further change the present frequency channel to a subsequent frequency channel.

2. The wireless communication system according to claim 1, wherein each of the first and second wireless signals is transmitted and received with a plurality of time slots that is synchronized with a synchronizing signal,
wherein the plurality of time slots comprises:
a downlink time slot (B) from the master terminal (1) to each slave terminal (10); and
a plurality of uplink time slots (D1 to Dm) from each slave terminal (10) to the master terminal (1), the plurality of uplink time slots (D1 to Dm) being assigned to the plurality of slave terminals (10) respectively, and
wherein the first controller (5) is configured to determine, for each of the plurality of uplink time slots (D1 to Dm), the presence or absence of the reception of the second wireless signal while sequentially changing the present frequency channel.

3. The wireless communication system according to claim 2,wherein when determining the presence of the reception of the second wireless signal in an uplink time slot of the plurality of uplink time slots (D1 to Dm), the first controller (5) is configured to control the first receiver (4) to continue the reception of the second wireless signal in the uplink time slot, and then not to change the present frequency channel to the subsequent frequency channel even after the reception of the second wireless signal is finished.

4. The wireless communication system according to any one of claims 1 to 3,wherein when an intensity of the radio wave received by the first receiver (4) on the present frequency channel is less than a predetermined value, the first controller (5) is configured to control the first receiver (4) to change the present frequency channel to the subsequent frequency channel before establishment of the bit synchronization.

5. The wireless communication system according to any one of claims 1 to 4, wherein the first receiver (4) comprises a plurality of antennas (2), and
wherein the first controller (5) is configured to measure an intensity of the radio wave received by the first receiver (4), while sequentially changing an antenna (2) to be selected in the plurality of antennas (2) for each of the plurality of frequency channels, and control the first receiver (4) to receive the second wireless signal with, from among the plurality of antennas (2), an antenna (2) in which the measured intensity is relatively high.

6. The wireless communication system according to any one of claims 1 to 4, wherein the first receiver (4) comprises a plurality of antennas (2), and
wherein the first controller (5) is configured to control the first receiver (4) to receive the second wireless signal, while sequentially changing an antenna (2) to be selected in the plurality of antennas (2), for each of the plurality of frequency channels.

7. The wireless communication system according to claim 2,wherein the first controller (5) is configured to make the first transmitter (3) periodically transmit the first wireless signal including a message for requesting a response to each slave terminal (10), and
wherein the second controller (15) is configured to regard the first wireless signal as the synchronizing signal to make the plurality of time slots, when receiving the message in the first wireless signal received by the second receiver (14).

8. The wireless communication system according to any one of claims 1 to 7,
wherein the first controller (5) is configured to store a priority level that is previously set for each of the plurality of frequency channels and change to, from among the plurality of frequency channels, a frequency channel in which the priority level is high, at relatively high frequency.

## Patentansprüche

1. Drahtloses Kommunikationssystem, das ein Master-Terminal (1) und mehrere Slave-Terminals (10) aufweist, bei dem ein Senden und ein Empfang erster und zweiter drahtloser Signale zwischen dem Master-Terminal (1) und jedem Slave-Terminal (10) unter Verwendung einer Funkwelle als ein Medium durchgeführt werden,
wobei das Master-Terminal (1) aufweist:
einen ersten Sender (3), der dazu eingerichtet ist, das erste drahtlose Signal zu senden;
einen ersten Empfänger (4), der dazu eingerichtet ist, das zweite drahtlose Signal zu empfangen; und
eine erste Steuereinrichtung (5), die dazu eingerichtet ist, den ersten Sender (3) und den ersten Empfänger (4) zu steuern,
wobei jedes Slave-Terminal (10) aufweist:
einen zweiten Sender (13), der dazu eingerichtet ist, das zweite drahtlose Signal zu senden;
einen zweiten Empfänger (14), der dazu eingerichtet ist, das erste drahtlose Signal zu empfangen; und
eine zweite Steuereinrichtung (15), die dazu eingerichtet ist, den zweiten Sender (13) und den zweiten Empfänger (14) zu steuern,
wobei die zweite Steuereinrichtung (15) dazu eingerichtet ist, den zweiten Sender (13) so zu steuern, dass das zweite drahtlose Signal auf einem Frequenzkanal gesendet wird, der aus mehreren Frequenzkanälen ausgewählt wird, die vorher bereitgestellt werden, und den zweiten Empfänger (14) so zu steuern, dass das erste drahtlose Signal auf dem ausgewählten Frequenzkanal empfangen wird,
wobei die erste Steuereinrichtung (5) dazu eingerichtet ist, eine Anwesenheit oder eine Abwesenheit eines Empfangs des zweiten drahtlosen Signals zu ermitteln, während ein gegenwärtiger Frequenzkanal, der unter den mehreren Frequenzkanälen auszuwählen ist, sequentiell gewechselt wird;
**dadurch gekennzeichnet, dass**
sowohl das erste als auch das zweite drahtlose Signal einen Rahmen aufweisen, der enthält: eine Präambel (PR) zum Herstellen einer Bit-Synchronisierung; und ein eindeutiges Wort (Unique Word, UW) zum Herstellen einer Rahmensynchronisation, und
wobei die erste Steuereinrichtung (5) dazu ausgelegt ist:
die Anwesenheit des Empfangs des zweiten drahtlosen Signals auf dem gegenwärtigen Frequenzkanal zu bestimmen, falls die Rahmensynchronisation hergestellt wird, bevor eine vorbestimmte Periode nach Herstellung der Bit-Synchronisierung für die durch den ersten Empfänger (4) empfangene Funkwelle abläuft, und ferner den Empfang des zweiten drahtlosen Signals auf dem gegenwärtigen Frequenzkanal fortzusetzen; und
die Abwesenheit des Empfangs des zweiten drahtlosen Signals auf dem vorliegenden Frequenzkanal zu bestimmen, falls die Rahmensynchronisation nicht hergestellt wird, bevor die vorbestimmte Periode abläuft, und zusätzlich von dem gegenwärtigen Frequenzkanal auf einen nachfolgenden Frequenzkanal zu wechseln.

2. Drahtloses Datenkommunilcationssystem nach Anspruch 1, wobei jedes von dem ersten und dem zweiten drahtlosen Signal mit einer Anzahl Zeitschlitzen gesendet und empfangen wird, die mittels eines Synchronisierungssignals synchronisiert werden,
wobei die mehreren Zeitschlitze beinhalten:
einen Downlink-Zeitschlitz (B) vom Master-Terminal (1) zu jedem Slave-Terminal (10); und
mehrere Uplink-Zeitschlitze (D1 bis Dm) von jedem Slave-Terminal (10) zum Master-Terminal (1), wobei die mehreren Uplink-Zeitschlitze (D1 bis Dm) jeweils den mehreren Slave-Terminals (10) zugewiesen sind, und
wobei die erste Steuereinrichtung (5) dazu eingerichtet ist, für jeden der mehreren Uplink-Zeitschlitze (D1 bis Dm) die Anwesenheit oder die Abwesenheit des Empfangs des zweiten drahtlosen Signals zu bestimmen, während der gegenwärtige Frequenzkanal sequentiell gewechselt wird.

3. Drahtloses Datenkommunikationssystem nach Anspruch 2, wobei, wenn die Anwesenheit des Empfangs des zweiten drahtlosen Signals in einem Uplink-Zeitschlitz der mehreren Uplink-Zeitschlitze (D1 bis Dm) bestimmt ist, die erste Steuereinrichtung (5) dafür ausgelegt ist, den ersten Empfänger (4) zu veranlassen, den Empfang des zweiten drahtlosen Signals in dem Uplink-Zeitschlitz fortzusetzen und anschließend auch nach der Beendigung des Empfangs des zweiten drahtlosen Signals nicht von dem gegenwärtige Frequenzkanal auf den nachfolgenden Frequenzkanal zu wechseln.

4. Drahtloses Datenkommunikationssystem nach einem beliebigen der Ansprüche 1 bis 3, wobei, wenn eine Intensität der Funkwelle, die durch den ersten Empfänger (4) auf dem gegenwärtigen Frequenzkanal empfangen ist, einen vorbestimmten Wert unterschreitet, die erste Steuereinrichtung (5) dafür ausgelegt ist, den ersten Empfänger (4) zu veranlassen, vor Herstellung der Bit-Synchronisierung von dem vorliegenden Frequenzkanal auf den nachfolgenden Frequenzkanal zu wechseln.

5. Drahtloses Datenkommunikationssystem nach einem beliebigen der Ansprüche 1 bis 4, wobei der erste Empfänger (4) mehrere Antennen (2) enthält, und
wobei die erste Steuereinrichtung (5) dazu eingerichtet ist, eine Intensität der Funkwelle zu erfassen, die durch den ersten Empfänger (4) empfangen ist, während eine Antenne (2), die aus den mehreren Antennen (2) für jede der mehreren Frequenzkanäle auszuwählen ist, sequentiell gewechselt wird, und den ersten Empfänger (4) zu veranlassen, das zweite drahtlose Signal mit einer Antenne (2) unter den mehreren Antennen (2) zu empfangen, bei der die gemessene Intensität verhältnismäßig hoch ist.

6. Drahtloses Datenkommunikationssystem nach einem beliebigen der Ansprüche 1 bis 4, wobei der erste Empfänger (4) mehrere Antennen (2) enthält, und
wobei die erste Steuereinrichtung (5) dazu eingerichtet ist, den ersten Empfänger (4) zu veranlassen, das zweite drahtlose Signal zu empfangen, während eine Antenne (2), die aus den mehreren Antennen (2) für jeden der mehreren Frequenzkanäle auszuwählen ist, sequentiell gewechselt wird.

7. Drahtloses Datenkommunikationssystem nach Anspruch 2, wobei die erste Steuereinrichtung (5) dazu eingerichtet ist, den ersten Sender (3) zu veranlassen, das erste drahtlose Signal, das eine Nachricht zum Anfordern einer Antwort enthält, periodisch zu jedem Slave-Terminal (10) zu senden, und
wobei die zweite Steuereinrichtung (15) dazu eingerichtet ist, das erste drahtlose Signal als das Synchronisierungssignal zu berücksichtigen, um die mehreren Zeitschlitze zu erzeugen, wenn die Nachricht in dem ersten drahtlosen Signal empfangen wird, das durch den zweiten Empfänger (14) empfangen ist.

8. Drahtloses Datenkommunikationssystem nach einem beliebigen der Ansprüche 1 bis 7, wobei die erste Steuereinrichtung (5) dazu eingerichtet ist, einen Prioritätsgrad zu speichern, der vorher für jeden der mehreren Frequenzkanäle eingestellt ist, und mit einer verhältnismäßig hohen Häufigkeit von unter den mehreren Frequenzkanälen auf einen Frequenzkanal zu wechseln, bei dem der Prioritätsgrad hoch ist.

## Revendications

1. Système de communication sans fil, comprenant un terminal maître (1) et une pluralité de terminaux esclaves (10), dans lequel une transmission et une réception de premier et second signaux sans fil sont mises en oeuvre entre le terminal maître (1) et chaque terminal esclave (10), en utilisant une onde radio en qualité de support ;
dans lequel le terminal maître (1) comporte :
un premier émetteur (3) configuré de manière à transmettre le premier signal sans fil ;
un premier récepteur (4) configuré de manière à recevoir le second signal sans fil ; et
un premier contrôleur (5) configuré de manière à commander le premier émetteur (3) et le premier récepteur (4) ;
dans lequel chaque terminal esclave (10) comporte :
un second émetteur (13) configuré de manière à transmettre le second signal sans fil ;
un second récepteur (14) configuré de manière à recevoir le premier signal sans fil ; et
un second contrôleur (15) configuré de manière à commander le second émetteur (13) et le second récepteur (14) ;
dans lequel le second contrôleur (15) est configuré de manière à commander au second émetteur (13) de transmettre le second signal sans fil sur un canal de fréquence qui est sélectionné parmi une pluralité de canaux de fréquence précédemment fournis, et à commander au second récepteur (14) de recevoir le premier signal sans fil sur le canal de fréquence sélectionné ;
dans lequel le premier contrôleur (5) est configuré de manière à déterminer la présence ou l'absence de réception du second signal sans fil tout en modifiant séquentiellement un canal de fréquence présent devant être sélectionné parmi la pluralité de canaux de fréquence ;
**caractérisé en ce que** :
chacun des premier et second signaux sans fil comporte une trame qui inclut : un préambule (PR) pour établir une synchronisation de bits ; et un mot unique (UW) pour établir une synchronisation de trames ; et
dans lequel le premier contrôleur (5) est configuré de manière à :
déterminer la présence de la réception du second signal sans fil sur le canal de fréquence présent, si la synchronisation de trames est établie avant qu'une période prescrite ne s'écoule après que la synchronisation de bits est établie pour l'onde radio reçue par le premier récepteur (4), et à poursuivre en outre la réception du second signal sans fil sur le canal de fréquence présent ; et
déterminer l'absence de la réception du second signal sans fil sur le canal de fréquence présent, si la synchronisation de trames n'est pas établie avant que la période prescrite ne s'écoule, et remplacer en outre le canal de fréquence présent par un canal de fréquence subséquent.

2. Système de communication sans fil selon la revendication 1, dans lequel chacun des premier et second signaux sans fil est transmis et reçu avec une pluralité de tranches de temps qui est synchronisée avec un signal de synchronisation ;
dans lequel la pluralité de tranches de temps comporte :
une tranche de temps de liaison descendante (B), du terminal maître (1) à chaque terminal esclave (10) ; et
une pluralité de tranches de temps de liaison montante (D1 à Dm), de chaque terminal esclave (10) au terminal maître (1), la pluralité de tranches de temps de liaison montante (D1 à Dm) étant affectée à la pluralité de terminaux esclaves (10), respectivement ; et
dans lequel le premier contrôleur (5) est configuré de manière à déterminer, pour chaque tranche de la pluralité de tranches de temps de liaison montante (D1 à Dm), la présence ou l'absence de la réception du second signal sans fil tout en modifiant séquentiellement le canal de fréquence présent.

3. Système de communication sans fil selon la revendication 2, dans lequel, lors de la détermination de la présence de la réception du second signal sans fil dans une tranche de temps de liaison montante de la pluralité de tranches de temps de liaison montante (D1 à Dm), le premier contrôleur (5) est configuré de manière à commander au premier récepteur (4) de poursuivre la réception du second signal sans fil dans la tranche de temps de liaison montante, et ensuite de ne pas remplacer le canal de fréquence présent par le canal de fréquence subséquent, y compris après que la réception du second signal sans fil est terminée.

4. Système de communication sans fil selon l'une quelconque des revendications 1 à 3, dans lequel lorsqu'une intensité de l'onde radio reçue par le premier récepteur (4) sur le canal de fréquence présent est inférieure à une valeur prédéterminée, le premier contrôleur (5) est configuré de manière à commander au premier récepteur (4) de remplacer le canal de fréquence présent par le canal de fréquence subséquent, avant l'établissement de la synchronisation de bits.

5. Système de communication sans fil selon l'une quelconque des revendications 1 à 4, dans lequel le premier récepteur (4) comporte une pluralité d'antennes (2) ; et
dans lequel le premier contrôleur (5) est configuré de manière à mesurer une intensité de l'onde radio reçue par le premier récepteur (4), tout en modifiant séquentiellement une antenne (2) devant être sélectionnée parmi la pluralité d'antennes (2) pour chaque canal de la pluralité de canaux de fréquence, et à commander au premier récepteur (4) de recevoir le second signal sans fil avec, parmi la pluralité d'antennes (2), une antenne (2) pour laquelle l'intensité mesurée est relativement élevée.

6. Système de communication sans fil selon l'une quelconque des revendications 1 à 4, dans lequel le premier récepteur (4) comporte une pluralité d'antennes (2) ; et
dans lequel le premier contrôleur (5) est configuré de manière à commander au premier récepteur (4) de recevoir le second signal sans fil, tout en modifiant séquentiellement une antenne (2) devant être sélectionnée parmi la pluralité d'antennes (2), pour chaque canal de la pluralité de canaux de fréquence.

7. Système de communication sans fil selon la revendication 2, dans lequel le premier contrôleur (5) est configuré de manière à amener le premier émetteur (3) à transmettre périodiquement le premier signal sans fil en incluant un message visant à demander une réponse à chaque terminal esclave (10) ; et
dans lequel le second contrôleur (15) est configuré de manière à considérer le premier signal sans fil comme le signal de synchronisation pour réaliser la pluralité de tranches de temps, lors de la réception du message dans le premier signal sans fil reçu par le second récepteur (14).

8. Système de communication sans fil selon l'une quelconque des revendications 1 à 7,
dans lequel le premier contrôleur (5) est configuré de manière à stocker un niveau de priorité qui est défini précédemment pour chaque canal de la pluralité de canaux de fréquence, et à passer, parmi la pluralité de canaux de fréquence, à un canal de fréquence dans lequel le niveau de priorité est élevé, à une fréquence relativement élevée.
